# EUROPÄISCHE PATENTSCHRIFT

(11) **EP 0 865 718 B1**
(45) Veröffentlichungstag und Bekanntmachung des Hinweises auf die Patenterteilung: **28.08.2002**
(21) Anmeldenummer: 98102966.3
(22) Anmeldetag: 20.02.1998
(51) Int. Cl.: A01C 7/08, A01C 15/04

(54) **Landwirtschaftliche Verteilmaschine**
Spreader
Epandeur

(30) Priorität: 21.03.1997 DE 19711942
(43) Veröffentlichungstag der Anmeldung: 23.09.1998
(73) Patentinhaber: Amazonen-Werke H. Dreyer GmbH & Co. KG, 49205 Hasbergen (DE)
(72) Erfinder: Siefken, Claus, 27777 Ganderkesee (DE)

(56) Entgegenhaltungen:
- EP-A- 0 752 203
- DE-A- 19 538 626
- SE-A- 8 302 108

## Beschreibung

Die Erfindung betrifft eine landwirtschaftliche pneumatische Verteilmaschine gemäß des Oberbegriffes des Patentanspruches 1.

Eine derartige Verteilmaschine ist in dem deutschen Patent DE 195 38 626 A beschrieben.

Der Erfindung liegt die Aufgabe zugrunde, die Rückführung des Saatgutes in den Vorratsbehälter einfach zu gestalten.

Diese Aufgabe wird erfindungsgemäß dadurch gelöst, daß die Rückleitung unterhalb eines im Vorratsbehälters angeordneten dachförmigen Elementes ausmündet. Infolge dieser Maßnahmen wird eine exakte und einfache Fixierung der Rückleitung im Vorratsbehälter erreicht. Darüber hinaus kann das aus der Rückleitung herausströmende Saatgut in vorteilhafter Weise unterhalb des dachförmigen Elementes aus der Leitung gelangen.

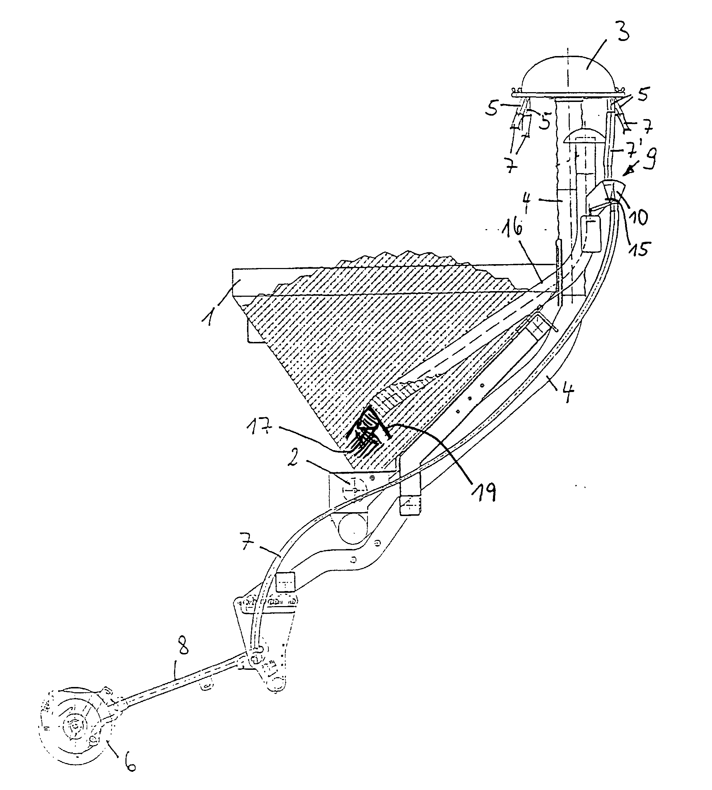

Weitere Einzelheiten der Erfindung sind den übrigen Unteransprüchen und der Beispielsbeschreibung zu entnehmen. Die Zeichnung zeigt
das Verteil- und Ausbringsystem einer pneumatischen Verteilmaschine in Seitenansicht und Prinzipdarstellung.

Die als pneumatische Drillmaschine ausgebildete landwirtschaftliche Verteilmaschine weist den Vorratsbehälter 1, die zentrale Dosiereinrichtung 2, das an einem nicht dargestellten Gebläse angeschlossene und zu einem Verteilerkopf 3 führende Förderrohr 4 auf. Der Verteilerkopf 3 weist eine Vielzahl von Abgängen 5 auf, an die die zu den Säscharen 6 führenden Verteilerleitungen 7 angeschlossen sind. Jeder Verteilerleitung 7 wird eine Teilmenge des Verteilgutes vom Verteilerkopf 3 zugeteilt. Die Ausbringelemente sind im Ausführungsbeispiel als Säschare 6 ausgebildet. Jede Verteilerleitung 7 ist an dem Säscharhalter 8 angeordnet, wobei das letzte Stück der Verteilerleitung 7 von dem Säscharhalterohr 8 ausgebildet wird. Einer Anzahl von Verteilerleitungen 7' ist eine Absperreinrichtung 9 zugeordnet. Diese Absperreinrichtung 9 ist als umstellbare Weiche ausgebildet. Diese umstellbare Weiche 9 ist in einem Sammelbehälter 10 angeordnet.

An der Unterseite des Sammelbehälters 10 schließt ein Trichter 15 an, der an eine Rückleitung 16, die in den Vorratsbehälter 1 führt, angeschlossen ist. Diese Rückleitung 16 ist in dem Bereich der Dosiereinrichtung 2 geführt und endet mit ihrer Mündung 17 in einem Bereich oberhalb der Dosiereinrichtung 2, in welchem das Saatgut von der Dosiereinrichtung 2 vorrangig aus dem Vorratsbehälter 10 abgezogen wird.

Weiterhin mündet die Rückleitung 16 unterhalb des dachförmigen Elementes 19 aus. Das dachförmige Element 19 ist zwischen zwei gegenüberliegenden Seitenwänden des Vorratsbehälters 1 oberhalb des Dosierorgans 2 angeordnet.

## Patentansprüche

1. Landwirtschaftliche pneumatische Verteilmaschine zum Verteilen eines vorzugsweise körnigen Verteilgutes, insbesondere eines Saatgutes oder Düngers, während des Ausbringens aus einem Vorratsbehälter (1) auf einem Acker, mit einer Dosiervorrichtung (2) für die dosierte pneumatische Förderung des Verteilgutes aus dem Vorratsbehälter (1) über eine Zuleitung zu einem Verteilerkopf (3), und mit an dem Verteilerkopf (3) angeschlossenen Verteilerleitungen (7) zur pneumatischen Förderung von jeweils einer Teilmenge des Verteilgutes zu jeweils einem Ausbringelement (6) für das Verteilgut, insbesondere zu einem Säschar oder einem Düngerstreuer, wobei ein Teil der Verteilerleitungen (7) an ihren Abgängen oder im Bereich der Abgänge aus dem Verteilerkopf (4) mit Absperreinrichtungen (9) versehen ist, die so geschaltet sein können; daß die Förderung des Verteilgutes zu dem jeweils zugehörigen Streuer unterbunden ist und statt dessen eine jeweils zugehörige Rückleitung (16) geöffnet ist, über welche das Verteilgut in den Vorratsbehälter (1) zurückleitbar ist, wobei die Rückleitung in den Bereich der Dosiereinrichtung (2) geführt ist und in einem Bereich oberhalb der Dosiereinrichtung (2) endet, in welchem das Saatgut von der Dosiereinrichtung (2) aus dem Vorratsbehälter (1) abgezogen wird, **dadurch gekennzeichnet, daß** die Rückleitung (16) unterhalb eines im Vorratsbehälter (1) angeordneten dachförmigen Elementes (19) ausmündet.

2. Verteilmaschine nach Anspruch 1, **dadurch gekennzeichnet, daß** das dachförmige Element (19) zwischen zwei gegenüberliegende Seitenwände des Vorratsbehälters (1) angeordnet ist.

3. Verteilmaschine nach Anspruch 1, **dadurch gekennzeichnet, daß** das dachförmige Element (19) oberhalb des Dosierorgans (2) angeordnet ist.

## Claims

1. Agricultural pneumatic distributing machine for the distributing of a preferably granular distributing material, more especially a seed material or fertiliser, during the depositing from a hopper (1) on a field, including a metering arrangement (2) for the metered pneumatic conveyance of the distributing material from the hopper (1) via a supply line to a distributor head (3), and including distributing lines (7), which are connected to the distributor head (3), for the pneumatic conveyance in each case of a part amount of the distributing material to a respective spreading member (6) for the distributing material, more especially to a sowing coulter or a fertiliser broadcaster, a portion of the distributing lines (7) being provided at their outlets or in the region of the outlets from the distributing head (3) with shutoff devices, which can be controlled in such a manner that the conveyance of the distributing material to the respectively associated spreader is prevented and a respectively associated return line (16) is opened instead, via which return line the distributing material is returnable into the hopper (1), the return line being directed into the region of the metering arrangement (2) and terminating above the metering arrangement (2) in a region, in which the seed material is drawn out of the hopper (1) by the metering arrangement (2), **characterised in that** the return line (16) opens out below a roof-shaped member (19) which is disposed in the hopper (1).

2. Distributing machine according to claim 1, **characterised in that** the roof-shaped member (19) is disposed between two oppositely situated side walls of the hopper (1).

3. Distributing machine according to claim 1, **characterised in that** the roof-shaped member (19) is disposed above the metering means (2).

## Revendications

1. Distributeur agricole, pneumatique pour répartir des produits, de préférence en forme de grains, notamment une semence ou un engrais à partir d'un réservoir d'alimentation (1), comprenant un dispositif de dosage (2) pour le transfert pneumatique dosé du produit à répartir à partir du réservoir (1) par une conduite d'alimentation reliée à une tête de distribution (3), et
des conduites de distribution (7) raccordées à la tête de distribution (3) pour transférer de manière pneumatique une quantité partielle des produits à répartir vers chaque élément de distribution (6) des produits, notamment vers un soc de semoir ou un épandeur d'engrais, une partie des conduites de répartition (7) étant munie à leur sortie, au niveau des sorties de la tête de distribution (4), d'installations de fermeture (9) conçues de façon à couper le transfert des produits vers l'épandeur correspondant, en ouvrant à l'opposé, une conduite de retour (16) correspondante par laquelle les produits à distribuer reviennent dans le réservoir (1),
la conduite de retour arrivant au niveau de l'installation de dosage (2) et se terminant dans une zone au-dessus de l'installation de dosage (2) dans laquelle la semence est extraite du réservoir (1) par l'installation de dosage (2),
**caractérisé en ce que**
la conduite de retour (16) débouche en dessous d'un élément (19) en forme de toit installé dans le réservoir (1).

2. Distributeur selon la revendication 1,
**caractérisé en ce que**
l'élément en forme de toit (19) est prévu entre deux parois latérales opposées du réservoir d'alimentation (1).

3. Distributeur selon la revendication 1,
**caractérisé en ce que**
l'élément en forme de toit (19) est installé au-dessus de l'organe de dosage (2).
